# EUROPÄISCHE PATENTANMELDUNG

(11) **EP 3 239 697 A1**
(43) Veröffentlichungstag der Anmeldung: **01.11.2017**
(21) Anmeldenummer: 16000964.3
(22) Anmeldetag: 28.04.2016
(51) Int. Cl.: G01N 21/90, B08B 9/46, B67C 3/00, G01N 21/47

(54) **VERFAHREN UND VORRICHTUNG ZUM DETEKTIEREN VON FREMDKÖRPERN IN BEHÄLTERN**

(71) Anmelder: Stratec Control-Systems GmbH, 75203 Königsbach-Stein (DE)
(72) Erfinder: Bernath, Christian, 76332 Bad Herrenalb (DE)
(74) Vertreter: Ostertag & Partner Patentanwälte mbB

(57) **Zusammenfassung**

Bei einem Verfahren zum Detektieren von Fremdkörpern (34) in Behältern (18), die mit einer Flüssigkeit (32) gefüllt sind und eine Öffnung sowie einen der Öffnung (33) gegenüber liegenden transparenten Boden (26) haben, werden die Behälter entlang einer zumindest im wesentlich horizontal verlaufenden Förderrichtung (20) gefördert. Die Behälter sind dabei zumindest im Wesentlichen aufrecht ausgerichtet, so dass deren Böden (26) nach unten weisen. Gleichzeitig wird ein Messstrahl (24) eines optischen Kohärenztomographen (22) von unten auf die vorbeiziehenden Böden (26) der Behälter gerichtet. Dadurch erfasst der Messstrahl an mehreren Messpunkten (28) ein Tiefenprofil eines jeden Bodens und ggf. darauf abgesetzter Fremdkörper (34). Außerdem wird der Messstrahl (24) entlang einer Scanrichtung (30) verlagert, die zumindest zeitweilig zu der Förderrichtung (20) einen Winkel zwischen 45° und 135° einschließt.

## Beschreibung

### HINTERGRUND DER ERFINDUNG

### 1. Gebiet der Erfindung

Die Erfindung betrifft ein Verfahren und eine Vorrichtung zum Detektieren von Glassplittern und anderen Fremdkörpern in Behältern, die mit einer Flüssigkeit gefüllt sind und zumindest einen transparenten Boden haben. Derartige Verfahren und Vorrichtungen werden insbesondere in Anlagen eingesetzt, in denen Getränken in Flaschen abgefüllt werden.

### 2. Beschreibung des Standes der Technik

Beim Abfüllen von Getränken in Flaschen muss sichergestellt werden, dass keine Flaschen in den Vertrieb geraten, in denen sich unerwünschte Fremdkörper befinden. Falls die Flaschen aus Glas bestehen, handelt es sich bei den Fremdkörpern häufig um kleinere Glassplitter, wie sie z. B. durch einen Flaschenbruch im Füller oder in einem fehlerhaften Verschließer entstehen können. Neben Glassplittern finden sich in Flaschen gelegentlich auch andere Fremdkörper, z. B. vom Füller abge-löste Dichteile oder organisches Material wie Insekten. Im Falle von Mehrwegflaschen kann es sich bei den Fremdkörpern auch um andere Gegenstände handeln, die beim Reinigen der Flasche nicht entfernt wurden, z. B. weil sie sich darin verklemmt haben.

Gelangen Flaschen mit Fremdkörpern in den Vertrieb, so kann dies vor allem im Falle von Glassplittern zu schweren Verletzungen führen, wenn Konsumenten die Fremdkörper unbemerkt zusammen mit dem Getränk zu sich nehmen. Dies führt für den Hersteller nicht nur zu Produkthaftungsrisiken, sondern auch zu einem beträchtlichen Imageschaden. Daher werden Getränkeflaschen vor der Auslieferung häufig daraufhin geprüft, ob sich Fremdkörper in den Flaschen befinden.

Im Stand der Technik sind unterschiedliche Verfahren zum Erfassen von Fremdkörpern in Flaschen und ähnlichen transparenten Behältern bekannt.

Im Prinzip lassen sich Fremdkörper oft mit dem bloßen Auge erkennen, indem die Flasche gegen das Licht gehalten und dabei gedreht wird. In oder auf der Flüssigkeit schwimmende Fremdkörper können auf diese Weise in der Regel an ihrer Bewegung erkannt werden. Für den Einsatz in der Getränkeindustrie wäre eine solche visuelle Inspektion jedoch viel zu langsam und aufwendig. Daher sind schon frühzeitig Verfahren entwickelt worden, mit denen sich die visuelle Inspektion durch Prüfpersonal ersetzen lässt.

Aus der US 4,136,930 ist ein Verfahren bekannt, bei dem Flaschen maschinell um eine horizontale Achse gedreht werden. Jeweils vor und nach der Drehung wird eine Kameraaufnahme der Flasche gemacht. Durch einen Vergleich der Bilder lassen sich durch die Drehung aufgewirbelte Fremdkörper erkennen. Allerdings stößt eine solche Erfassung von Bildern im sichtbaren Wellenlängenspektrum vor allem dann an Grenzen, wenn der Behälter und/oder die darin enthaltene Flüssigkeit dunkel und/oder trübe sind. Selbst bei intensiver Beleuchtung der Flasche lassen sich darin enthaltene Fremdkörper unter Umständen nur schwer mit ausreichender Zuverlässigkeit durch bildverarbeitende Methoden erkennen.

Durchgesetzt haben sich deswegen Verfahren, bei denen die Flaschen mit Röntgenstrahlung durchleuchtet werden. Innerhalb dieser Verfahren wird danach differenziert, wie die Flasche bei der Durchleuchtung ausgerichtet ist und aus welcher Richtung die Röntgenstrahlung die Flasche durchsetzt.

Aus der EP 0 961 114 A1 ist ein Röntgen-Verfahren bekannt, bei dem die mit einem Deckel verschlossenen Flaschen von einem Klemmbackenförderer auf den Kopf gedreht werden, so dass ihre Verschlüsse nach unten und ihre Böden nach oben weisen. In dieser Lage werden die Flaschen entlang ihrer Längsachse von Röntgenstrahlen durchleuchtet.

Aus der WO 01/44791 A2 ist ein Verfahren bekannt, bei dem die Flaschen vor der Durchleuchtung mit Röntgenstrahlung in eine annähernd horizontale Lage überführt werden, bevor sie in vertikaler Richtung mit Röntgenstrahlung durchleuchtet werden.

Bei dem aus der DE 10 2006 048 327 A1 bekannten Verfahren werden die Flaschen ebenfalls vor der Durchleuchtung mit Röntgenstrahlung auf den Kopf gestellt. Die Durchleuchtung erfolgt hier jedoch nicht entlang der Längsrichtung der Flaschen, sondern quer hierzu, und zwar im Bereich des Flaschenhalses. Fremdkörper, die sich in der Nähe des Verschlusses abgesetzt haben, lassen sich dort besonders leicht mit Hilfe der Röntgenstrahlung detektieren.

Die Durchleuchtung mit Röntgenstrahlung ermöglicht eine sehr zuverlässige Erfassung von Fremdkörpern in Flaschen und ähnlichen Behältern. Nachteilig bei diesen bekannten Verfahren ist allerdings, dass die Flaschen auf die Seite oder auf den Kopf gestellt werden müssen, um die Fremdkörper zuverlässig detektieren zu können. Dies erfordert Fördereinrichtungen wie Klemmbackenförderer, die in der Anschaffung teuer sind, viel Platz beanspruchen und regelmäßig gewartet werden müssen. Wegen der im Betrieb auftretenden Röntgenstrahlung muss der Überprüfungsbereich außerdem gemäß den geltenden strahlenschutzgesetzlichen Regelungen gegen den unbefugten Zutritt von Personal gesichert sein.

Ähnliche Probleme treten auch bei der Erfassung von Fremdkörpern in anderen transparenten Behältern auf, und zwar insbesondere in der Lebensmittelindustrie. Auch in Kunststoffflaschen, die mit Speiseöl gefüllt sind, oder in Gläsern, die Flüssigkeiten wie Fonds enthalten, müssen die Behälter vor der Auslieferung auf das Vorhandensein von Fremdkörpern untersucht werden.

### ZUSAMMENFASSUNG DER ERFINDUNG

Aufgabe der Erfindung ist es, ein Verfahren und eine Vorrichtung anzugeben, mit denen sich Fremdkörper in Behältern zuverlässig, aber mit geringerem Aufwand und Platzbedarf detektieren lassen.

Diese Aufgabe wird durch ein Verfahren zum Erfassen von Fremdkörpern in Behältern gelöst, die mit einer Flüssigkeit gefüllt sind und eine Öffnung sowie einen der Öffnung gegenüberliegenden transparenten Boden haben. Das erfindungsgemäße Verfahren umfasst die folgenden Schritte:
a) Fördern der Behälter entlang einer zumindest im wesentlich horizontal verlaufenden Förderrichtung, wobei die Behälter zumindest im wesentlichen aufrecht ausgerichtet sind, so dass deren Böden nach unten weisen;
b) Richten eines Messstrahls eines optischen Kohärenztomographen von unten auf die vorbeiziehenden Böden der Behälter, wodurch der Messstrahl an mehreren Messpunkten ein Tiefenprofil eines jeden Bodens und ggf. darauf abgesetzter Fremdkörper erfasst;
c) während des Schritts b) Verlagern des Messstrahls entlang einer Scanrichtung, die zumindest zeitweilig zu der Förderrichtung einen Winkel zwischen 45° und 135° einschließt.

Die Erfindung beruht auf der Erkenntnis, dass sich mit optischen Kohärenztomographen optische Grenzflächen sehr rasch, berührungsfrei und mit hoher Genauigkeit erfassen lassen. Kohärenztomographen gehören zur Gruppe der Weißlichtinterferometer und beruhen auf deren Prinzip, Messlicht, das von einer optischen Grenzfläche eines Messobjekts reflektiert wurde, mit Messlicht zu überlagern, das in einem Referenzarm geführt wurde. Bisher wurden Kohärenztomographen nur in der Augenheilkunde für die Vermessung der Hornhaut (lat. *Cornea*) eingesetzt.

Da die Oberfläche von Fremdkörpern im Allgemeinen nicht senkrecht zum Messstrahl ausgerichtet ist und zudem häufig (insbesondere im Falle von Glassplittern) sehr glatt ist und deswegen wenig Licht streut, konnte zunächst nicht erwartet werden, dass von der Oberfläche des Fremdkörpers genügend Messlicht zurück in den Kohärenztomographen reflektiert würde. Es hat sich jedoch gezeigt, dass die Flüssigkeit im Behälter ein so hohes Streuvermögen hat, dass sie Messlicht, dass von einer glatten und stärker zum Messstrahl geneigten Flächen eines Fremdkörpers reflektiert wird, zumindest teilweise in den Objektarm des Kohärenztomographen zurückstreut. Überraschenderweise ermöglich somit erst das Vorhandensein der Flüssigkeit eine ausreichend zuverlässige Detektion der Fremdkörper im Behälter.

Bei den im Stand der Technik bekannten Messverfahren ist es im Allgemeinen unerwünscht, wenn sich die Fremdkörper auf dem Boden des Behälters absetzen. Der Boden ist nämlich häufig gewölbt und/oder strukturiert, weswegen sich ein Fremdkörper davon schlecht abhebt. Aus diesem Grunde werden die Behälter bislang vor der Durchleuchtung mit sichtbarem Licht oder Röntgenstrahlung im Stand der Technik meist auf die Seite gelegt oder auf den Kopf gestellt.

Bei der erfindungsgemäßen Detektion mit Hilfe eines optischen Kohärenztomographen hingegen lassen sich die Fremdkörper auch dann erkennen, wenn sie auf einem gewölbten oder strukturierten Boden des Behälters aufliegen. Im Gegensatz zu der Aufnahme von Bildern mit sichtbarem Licht oder Röntgenlicht erlaubt die optische Kohärenztomographie nämlich die Erzeugung eines Tiefenprofils in Ausbreitungsrichtung des Messstrahls. Dies bedeutet, dass auch die Abstände zwischen detektierten optischen Grenzflächen genau bestimmt werden können. Während etwa in einem Röntgenbild, das von einem Boden des Behälters aufgenommen wird, kaum erkennbar ist, ob es sich bei einem dunklen Fleck auf dem Röntgenbild um einen Fremdkörper im Behälter oder eine Ablagerung an der Außenseite des Behälterbodens handelt, lässt sich mit Hilfe der optischen Kohärenztomographie in einem solchen Fall klar erkennen, wo sich die erkannte Grenzfläche in axialer Richtung befindet.

Erfindungsgemäß werden deswegen die Behälter in aufrechter Ausrichtung von unten her mit dem optischen Kohärenztomographen vermessen. Aufwendige Fördereinrichtungen zum Neigen oder Umdrehen der Behälter können somit entfallen. Dadurch lässt sich eine für die Durchführung des Verfahrens geeignete Detektionsvorrichtung mit minimalem Aufwand und Platzbedarf sogar in eine bereits bestehende Förderstrecke einer Getränkeabfüllanlage integrieren. Unter Umständen kann auch eine Integration in andere Geräte wie Füller oder Etikettierer vorteilhaft sein.

In Abfüllanlagen werden Behälter oft mit hohen Verfahrgeschwindigkeiten in der Größenordnung von 1 bis 2 m/s transportiert. Zumindest bei eine Durchleuchtung mit Röntgenlicht stellen derart hohe Verfahrgeschwindigkeiten ein Problem dar, da man sehr hohe Strahlungsintensitäten benötigt, um Unschärfen zu vermeiden.

Bei dem erfindungsgemäßen Verfahren hingegen werden die hohen Verfahrgeschwindigkeiten gleichzeitig dazu benutzt, um entlang der Förderrichtung den Boden des Behälters mit Messpunkten abzuscannen. Um eine ausreichend dichte Anordnung von Messpunkten über den gesamten Boden des Behälters zu erhalten, muss der Messstrahl lediglich entlang einer Scanrichtung verlagert werden, die zumindest zeitweilig zu der Förderrichtung einen Winkel zwischen 45° und 135°, und vorzugsweise einen Winkel von 90°, einschließt. Erfindungsgemäß wird somit, anders als bei herkömmlichen Messungen mit optischen Kohärenztomographen, nicht entweder das Messobjekt oder der Messstrahl, sondern sowohl das Messobjekt als auch der Messstrahl bewegt.

Auf welche Weise der Messstrahl entlang der Scanrichtung verlagert wird, ist letztlich nicht von Bedeutung. Die Verlagerung kann in einem lateralen Versetzen, in einer Drehung des Messstrahls oder auch in einer Kombination einer translatorischen Bewegung mit einer Drehbewegung bestehen.

Besonders einfach ist es, wenn der Messstrahl mit Hilfe eines an sich bekannten Galvanoscanners in einer Scanebene verschwenkt wird, die senkrecht zur Förderrichtung ausgerichtet ist. Im Prinzip ist es jedoch auch möglich, einen Taumelspiegel zu verwenden, wodurch der Messstrahl auf einer Kreisbahn umläuft und dadurch meist auch eine Bewegungskomponente entlang der Förderrichtung hat. Erforderlich ist lediglich, dass der Messstrahl sich nicht ausschließlich parallel zur Förderrichtung bewegt, da ansonsten die Messpunkte nur auf einer Linie lägen und nicht über die Fläche des Behälterbodens verteilt wären.

Vor allem dann, wenn Kipp- oder Taumelspiegel zur Strahlverlagerung eingesetzt werden, ist es zweckmäßig, wenn der Messstrahl ein telezentrisches F-Theta-Objektiv durchtritt, bevor er auf den Boden der Flaschen auftrifft. Dadurch ist sichergestellt, dass der Messstrahl unabhängig von der Ablenkung durch den Spiegel parallel zur optischen Achse des F-Theta-Objektivs verläuft.

Kohärenztomographen, bei denen die optische Weglänge im Referenzarm moduliert und kontinuierlich die Intensität des Interferenzsignals erfasst wird, ohne dessen spektrale Zusammensetzung zu berücksichtigen (TD-OCT, *time domain optical coherence tomography*), haben einen relative kleinen axialen Messbereich in der Größenordnung von wenigen Millimetern. Wenn der Boden des Behälters besonders dickwandig oder stark gewölbt ist, kann ein solcher axialer Messbereich zu klein sein.

Bevorzugt erfasst der Kohärenztomograph deswegen die Interferenzsignale individuell für die einzelnen spektralen Komponenten des Messlichts (FD-OCT, *frequency domain optical coherence tomography*). Derartige FD-Kohärenztomographen benötigen keine durchstimmbaren optischen Weglängen im Referenzarm, erfordern jedoch einen höheren Aufwand bei der rechnerischen Auswertung. Nach dem FD-OCT-Prinzip arbeitende Kohärenztomographen haben üblicherweise einen axialen Messbereich von wenigen Zentimetern, was für die Detektion von Fremdkörpern in Flaschen und ähnlichen transparenten Behältern ausreichend ist. Weil keine mechanische Verstimmung der optischen Weglänge im Referenzarm notwendig ist, lassen sich zudem sehr hohe Messgeschwindigkeiten realisieren.

Im Allgemeinen wird die Förderrichtung, entlang der die Behälter gefördert werden, exakt horizontal verlaufen. Möglich sind jedoch auch Abweichungen der Förderrichtung zu einer Horizontalen bis zu einem Winkel von maximal 30°. Bei derartigen Abweichungen müssen die Behälter noch nicht mit aufwendigeren Klemmbackenförderern o. ä. gefördert werden. Trotzdem bleibt der Boden der Behälter bei einer solchen Neigung noch innerhalb des axialen Messbereichs des optischen Kohärenztomographen. Bei einer solchen Neigung der Förderrichtung schließt die Längsachse der Behälter zu einer Vertikalen einen Winkel von ebenfalls maximal 30° ein.

Gegenstand der Erfindung ist außerdem eine Vorrichtung zum Detektieren von Fremdkörpern in Behältern, die mit einer Flüssigkeit gefüllt sind und eine Öffnung sowie einen der Öffnung gegenüberliegenden Boden haben. Die erfindungsgemäße Vorrichtung umfasst
a) eine Fördereinrichtung, die dazu eingerichtet ist, die Behälter entlang einer zumindest im wesentlich horizontal verlaufenden Förderrichtung so zu fördern, dass die Behälter zumindest im wesentlichen aufrecht ausgerichtet sind und deren Böden nach unten weisen,
b) einen optischen Kohärenztomographen, der dazu eingerichtet ist, einen Messstrahls zu erzeugen und so von unten auf die vorbeiziehenden Böden der Behälter zu richten, dass der Messstrahl an mehreren Messpunkten ein Tiefenprofil eines jeden Bodens und ggf. darauf abgesetzter Fremdkörper erfasst, und
c) eine Ablenkeinrichtung, die dazu eingerichtet ist, während des Schritts b) den Messstrahl entlang einer Scanrichtung zu verlagern, die zumindest zeitweilig zu der Förderrichtung einen Winkel zwischen 45° und 135° einschließt.

Die vorstehenden Erläuterungen zum Verfahren gelten für die Vorrichtung entsprechend.

Gegenstand der Erfindung ist außerdem eine Getränkeabfüllanlage mit einer erfindungsgemäßen Vorrichtung.

### KURZE BESCHREIBUNG DER ZEICHNUNGEN

Weitere Merkmale und Vorteile der Erfindung ergeben sich aus der nachfolgenden Beschreibung der Ausführungsbeispiele anhand der Zeichnungen. Darin zeigen:
- Figur 1: eine schematische Seitenansicht einer erfindungsgemäßen Detektionsvorrichtung;
- Figuren 2a bis 2d: Schnitte durch die in der Figur 1 gezeigte Abfüllanlage entlang der Linie II-II zu unterschiedlichen Zeitpunkten während eines Detektionsvorgangs;
- Figur 3: eine mögliche Anordnung von Messpunkten über den Boden der Flasche hinweg;
- Figur 4a: einen Schnitt durch eine Flasche, an deren Boden sich ein Fremdkörper abgesetzt hat;
- Figur 4b: das vom optischen Kohärenztomographen erzeugte Messsignal, mit dem der Fremdkörper detektiert wird;
- Figur 5: den inneren Aufbau des Kohärenztomographen und der Ablenkeinrichtung in einem schematischen Meridionalschnitt, die in der Detektionsvorrichtung enthalten sind;
- Figur 6: ein Flussdiagramm, in dem wichtige Schritte des erfindungsgemäßen Verfahrens aufgeführt sind.

### BESCHREIBUNG BEVORZUGTER AUSFÜHRUNGSBEISPIELE

### 1. Aufbau der Detektionsvorrichtung

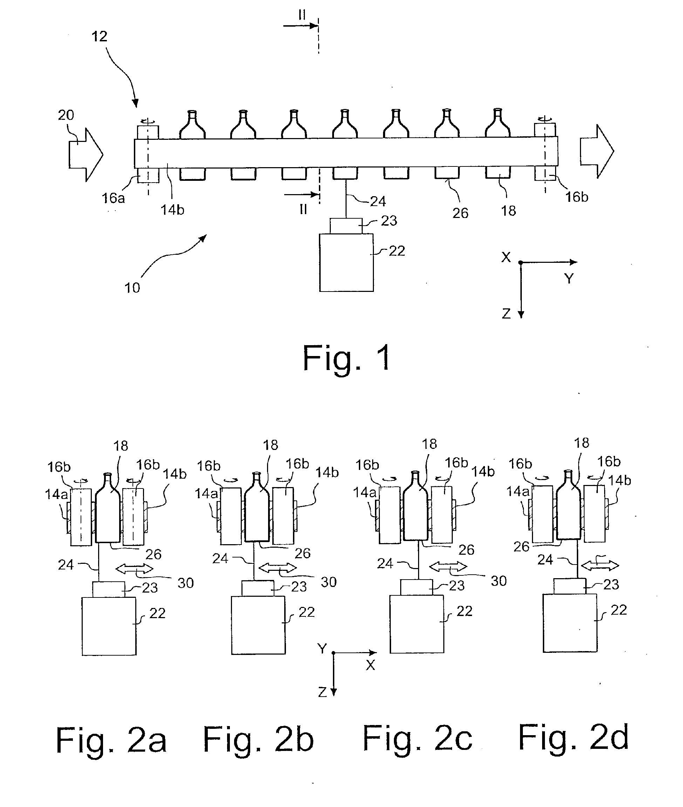

Die Figur 1 zeigt eine erfindungsgemäße und insgesamt mit 10 bezeichnete Detektionsvorrichtung in einer vereinfachten Seitenansicht. Zur Detektionsvorrichtung 10 gehört eine Fördereinrichtung 12, die im dargestellten Ausführungsbeispiel als Riemenförderer ausgebildet ist. Die Fördereinrichtung 12 kann z. B. Bestandteil einer bereits vorhandenen Fördereinrichtung in einer Flaschenabfüllanlage sein. Anstelle eines Riemenförderers können selbstverständlich auch andere Fördereinrichtungen wie etwa Klemmbackenförderer verwendet werden.

Die Fördereinrichtung 12 umfasst im dargestellten Ausführungsbeispiel eine zwei umlaufende Riemen 14a, 14b und zwei Paare von drehbar gelagerten Umlenkrollen 16a, 16b, deren Drehachsen vertikal verlaufen und von denen mindestens eine Rolle angetrieben ist. Am besten ist dies in den Figuren 2a bis 2d erkennbar, die Schnitte durch die Detektionsvorrichtung 10 entlang der Linie II-II zu verschiedenen Zeitpunkten zeigen. Die einander zugewandten Seiten der Riemen 14a, 14b halten mit einer Flüssigkeit gefüllte Flaschen 18 zwischen sich fest. Durch gleichzeitige Drehung der Umlenkrollen 16a, 16b werden die Flaschen entlang einer mit einem Pfeil 20 angedeuteten Förderrichtung gefördert, die in der Figur 1 der Y-Richtung entspricht.

Zur Detektionsvorrichtung 10 gehört ferner ein optischer Kohärenztomograph 22 und eine Ablenkeinrichtung 23, die beide unterhalb der Fördereinrichtung 12 angeordnet sind. Der optische Kohärenztomograph 22 erzeugt einen Messstrahl 24, der von der Ablenkeinrichtung 23 von unten auf die vorbeiziehenden Böden 26 der Flaschen 18 gerichtet wird. An jedem Messpunkt erzeugt der Messstrahl 24 ein Tiefenprofil des Bodens 26 und eines ggf. darauf abgesetzten Fremdkörpers.

### 2. Scannen

Mit Hilfe der Ablenkeinrichtung 23 wird der Messstrahl 24 entlang einer Scanrichtung verlagert, während die Flaschen 18 von der Fördereinrichtung 12 entlang der Förderrichtung 12 gefördert werden. Dies wird im Folgenden mit Bezug auf die Figuren 2a bis 2d erläutert. Durch Vergleich der Figuren erkennt man, dass der Messstrahl 24 entlang einer Scanrichtung 30 verlagert wird, die mit der X-Richtung zusammenfällt und somit senkrecht zur Förderrichtung 20 verläuft. Diese Verlagerung findet statt, während gleichzeitig die Flaschen 18 entlang der Förderrichtung 20, d. h. in den Figuren 1a bis 2d senkrecht zur Papierebene, gefördert werden.

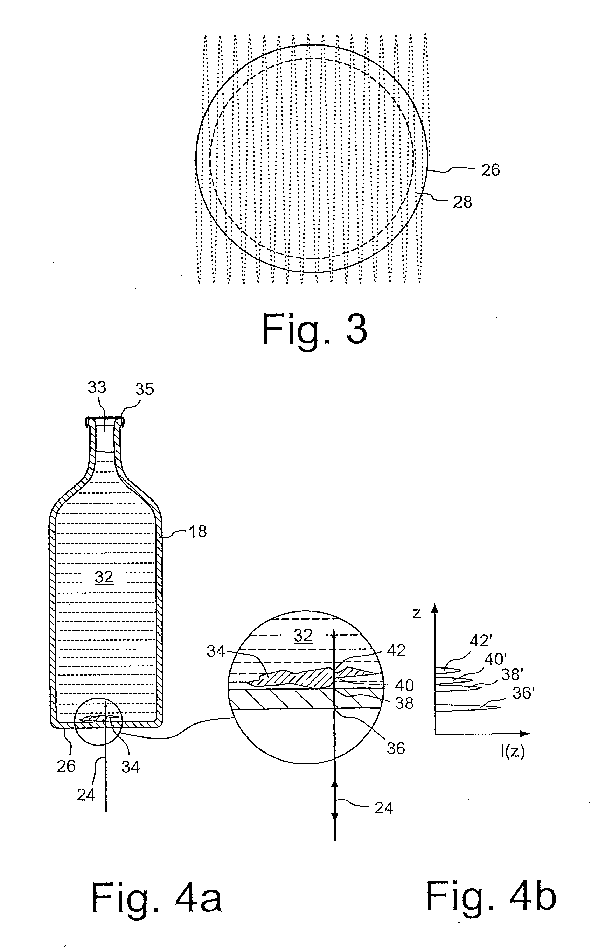

Wenn der Messstrahl 24 dabei sinusförmig von der Ablenkeinrichtung 23 entlang der Scanrichtung 30 verfahren wird, erhält man durch Überlagerung mit der Förderbewegung der Flaschen 18 entlang der Förderrichtung 20 eine Anordnung von Messpunkten, wie sie in der Figur 3 schematisch gezeigt ist. Der durchgezogene Kreis repräsentiert dabei den Umfang des Bodens 26 der gerade vermessenen Flasche 18. Die mit 28 bezeichneten Messpunkte sind so auf einer Sinuskurve angeordnet, dass die Fläche des Bodens 26 relativ gleichmäßig mit Messpunkten 28 überdeckt ist.

Bei einem quadratischen Messpunktraster mit einer Kantenlänge von 10 cm sind 10 000 Messpunkte erforderlich, wenn in jedem Quadratmillimeter ein Messpunkt liegen soll. Da die auf der Sinuskurve liegenden Messpunkte 28 nicht exakt in einem quadratischen Raster liegen, muss die Zahl der Messpunkte bei dieser Vorgabe folglich etwas größer als 10 000 sein. Die Zahl der Messpunkte 28 hängt zum einen von der Abtastrate des Kohärenztomographen 22, der Fördergeschwindigkeit der Flaschen 18, die üblicherweise in der Größenordnung von 1 bis 2 m/s liegt, und der Scangeschwindigkeit ab, mit welcher der Messstrahl 24 entlang der Scanrichtung 30 verlagert wird. Bei einer Fördergeschwindigkeit von 1 m/s, einer Scanfrequenz von 500 Hz (bezogen auf eine volle Periode), einer Scanamplitude von 10 cm und einer Abtastrate von 100 kHz würde man genau 10 000 Messpunkte auf einer Fläche von 10 cm² erhalten.

### 3. Detektion von Fremdkörpern

Die Figur 4a zeigt einen Schnitt durch eine Flasche 18, die mit einer Flüssigkeit 32 gefüllt ist und deren Öffnung 33 bereits mit einem Verschluss 35 verschlossen ist. Am Boden 26 der Flasche 18 hat sich ein Fremdkörper 34 abgesetzt, bei dem es sich um einen Glassplitter mit glatten und in unterschiedliche Richtungen geneigten Flächenabschnitten handelt. Trifft der Messstrahl 24 von unten auf den Boden 26, so durchsetzt er hintereinander vier optische Grenzflächen, wie dies am besten in der vergrößerten Darstellung rechts neben der Flasche 18 erkennbar ist. Eine erste Grenzfläche 36 wird zwischen der umgebenden Luft und der Außenfläche der Flasche 18, eine zweite Grenzfläche 38 zwischen der Innenfläche der Flasche 18 und der Flüssigkeit 32, eine dritte Grenzfläche 40 zwischen der Flüssigkeit 32 und dem Fremdkörper 34 und eine vierte Grenzfläche 42 zwischen dem Fremdkörper 34 und der Flüssigkeit 32 gebildet.

Messlicht, das an den vier optischen Grenzflächen 36, 38, 40 und 42 reflektiert wird, gelangt zu einem Teil wieder zurück in den optischen Kohärenztomographen 22 und wird mit Referenzlicht zur Interferenz gebracht. Aus dem Interferenzsignal lässt sich in an sich bekannter Weise der Abstand zwischen den Grenzflächen 36, 38, 40, 42 bestimmen.

Die Figur 4b zeigt das vom optischen Kohärenztomographen 22 erzeugte Messsignal I(z) für die in der Figur 4a gezeigte Messung. Jeder der vier Signalpeaks 36', 38', 40' und 42' entspricht dabei einer optischen Grenzfläche 36, 38, 40 bzw. 42. Da durch Absorption und Reflektion ein Teil des Messlichts verloren geht, nimmt die Höhe der Peaks 36', 38', 40', 42' tendenziell ab, je weiter eine Grenzfläche in Strahlrichtung vom Kohärenztomographen 22 entfernt ist. Die Höhe der Peaks wird aber außerdem durch die optischen Eigenschaften der Grenzflächen, und zwar insbesondere durch deren Reflexionsvermögen, Neigung und Streuvermögen, bestimmt. Das in der Figur 4b gezeigte Messsignal ist deswegen rein illustrativ und kann von einem realen Messsignal deutlich abweichen.

Obwohl die auf den Fremdkörper 34 zurückgehenden dritten und vierten Grenzflächen 40, 42 stark geneigt zur Ausbreitungsrichtung des Messstrahls 24 verlaufen, gelangt ein ausreichend großer Teil des von diesen Grenzflächen 40, 42 reflektierten Lichts zurück in den optischen Kohärenztomographen 22. Hierzu trägt auch die umgebende Flüssigkeit 32 bei, die einen Teil des von den Grenzflächen 40, 42 reflektierten Lichts so streut, dass es wieder zurück in die Apertur des Kohärenztomographen 22 eintreten kann.

### 4. Aufbau des Kohärenztomographen und der Ablenkeinrichtung

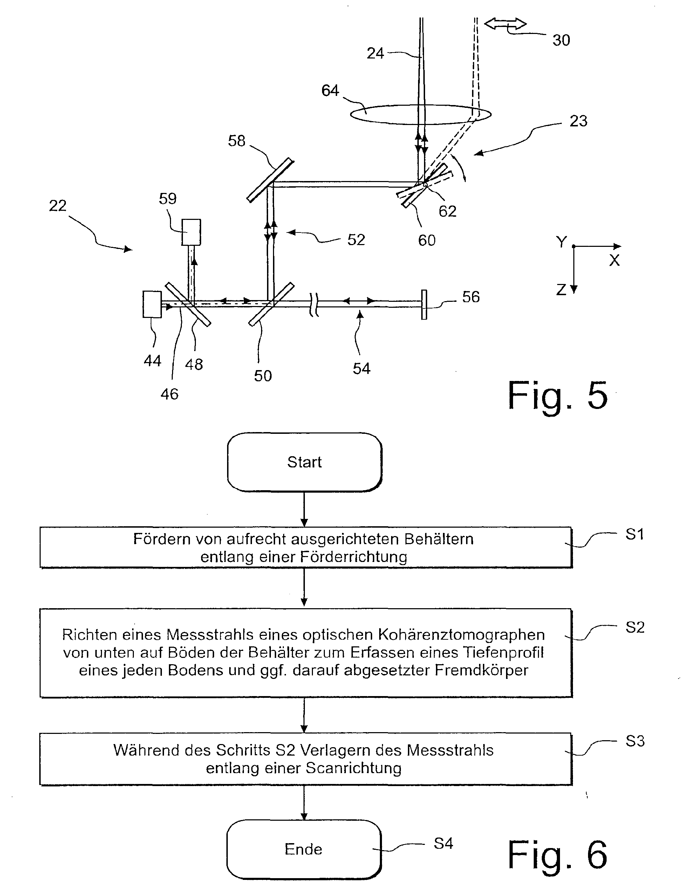

Die Figur 5 zeigt in einem schematischen Meridionalschnitt den inneren Aufbau des Kohärenztomographen 22 und der Ablenkeinrichtung 23, mit der sich der Messstrahl 24 entlang der Scanrichtung 30 verlagern lässt. Der Kohärenztomograph 22 umfasst eine Lichtquelle 44 zur Erzeugung von Messlicht 46, bei der es sich z.B. um eine Superlumineszenzdiode handeln kann, die breitbandiges Licht mit einer Mittenwellenlänge im infraroten Spektralbereich erzeugt. Ferner weist der Kohärenztomograph 22 einen ersten Strahlteiler 48 und einen zweiten Strahlteiler 50 auf, hinter dem sich der Strahlengang in einen Objektarm 52 und einen Referenzarm 54 aufteilt. Am Ende des Referenzarms 54 befindet sich ein Spiegel 56, der das auftreffende Messlicht 46 in sich reflektiert.

Das im Objektarm 52 geführte Messlicht wird über einen Umlenkspiegel 58 der Ablenkeinrichtung 23 zugeführt. Messlicht, das aus dem Objektarm 52 ausgetreten und teilweise von den Grenzflächen 36, 38, 40, 42 reflektiert wurde, tritt teilweise über die Anlenkeinrichtung 23 wieder in den Objektarm 52 ein und gelangt über die Strahlteiler 50 und 48 auf einen Detektor 59. Dieser enthält einen spektral auflösenden Lichtsensor, der die Interferenz von Messlicht, das von den Grenzflächen 36, 38, 40, 42 reflektiert wurde, mit Messlicht, das in dem Referenzarm 54 eine ähnliche optische Wegstrecke zurückgelegt hat, erfasst. Gemäß dem FD-OCT-Prinzip werden dabei Interferenzsignale individuell für einzelne spektrale Komponenten des Messlichts erzeugt. Dadurch erhält man ein Tiefenprofil entlang der Ausbreitungsrichtung des Messtrahls 24, aus dem sich die relativen Abstände aller optischen Grenzflächen ableiten lassen.

Die Ablenkeinrichtung 23 umfasst im dargestellten Ausführungsbeispiel einen Kippspiegel 60, der um eine Kippachse 62 verkippbar ist. Der Kippspiegel 60 wird von einem resonanten Galvanometer (nicht dargestellt) in eine Schwingung um die Kippachse 62 mit der Eigenfrequenz des Kippspiegels 60 versetzt. Selbstverständlich kann die Ablenkeinrichtung 23 den Messstrahl 24 auch auf andere Weise ablenken. Neben Galvoscannern sind auch um eine Achse verkippbare MEMS-Spiegel geeignet.

Zur Ablenkeinrichtung 23 gehört ferner ein durch eine Linse angedeutetes telezentrisches F-Theta-Objektiv 64, in dessen Brennebene sich der Kippspiegel 60 befindet. Das telezentrisches F-Theta-Objektiv 64 bewirkt, dass der austretende Messstrahl 24 stets, d. h. unabhängig vom Kippwinkel des Kippspiegels 60, parallel zur optischen Achse des F-Theta-Objektivs ausgerichtet ist. Auf diese Weise wird der oben anhand der Figuren 2a bis 2d erläuterte parallele Versatz des Messstrahls 24 entlang der Scanrichtung 30 erzielt.

### 5. Wichtige Verfahrensschritte

Die Figur 6 illustriert wichtige Schritte des erfindungsgemäßen Messverfahrens anhand eines Flussdiagramms.

In einem ersten Schritt S1 werden aufrecht ausgerichtete Behälter (Flaschen 18) entlang einer Förderrichtung 20 gefördert.

In einem zweiten Schritt S2 wird ein Messstrahl 24 des optischen Kohärenztomographen 22 von unten auf die Böden 26 der Behälter zum Erfassen eines Tiefenprofils eines Bodens und ggf. darauf abgesetzter Fremdkörper 34 gerichtet.

In einem dritten Schritt S3, der gleichzeitig mit dem Schritt S2 stattfindet, wird der Messstrahl 24 entlang der Scanrichtung 30 verlagert.

Durch die Überlagerung der Förderbewegung der Behälter mit der Scanbewegung des Messstrahls 24 erhält man eine zweidimensionale Überdeckung der Böden 26 mit Messpunkten 28.

## Patentansprüche

1. Verfahren zum Detektieren von Fremdkörpern (34) in Behältern (18), die mit einer Flüssigkeit (32) gefüllt sind und eine Öffnung sowie einen der Öffnung (33) gegenüber liegenden transparenten Boden (26) haben, umfassend die folgenden Schritte:
a) Fördern der Behälter (18) entlang einer zumindest im wesentlich horizontal verlaufenden Förderrichtung (20), wobei die Behälter zumindest im wesentlichen aufrecht ausgerichtet sind, so dass deren Böden (26) nach unten weisen;
b) Richten eines Messstrahls (24) eines optischen Kohärenztomographen (22) von unten auf die vorbeiziehenden Böden (26) der Behälter, wodurch der Messstrahl an mehreren Messpunkten (28) ein Tiefenprofil eines jeden Bodens und ggf. darauf abgesetzter Fremdkörper (34) erfasst;
c) während des Schritts b) Verlagern des Messstrahls (24) entlang einer Scanrichtung (30), die zumindest zeitweilig zu der Förderrichtung (20) einen Winkel zwischen 45° und 135° einschließt.

2. Verfahren nach Anspruch 1, wobei der Kohärenztomograph (22) nach dem FD-OCT-Prinzip Interferenzsignale individuell für einzelne spektrale Komponenten des Messstrahls erfasst.

3. Vorrichtung (10) zum Detektieren von Fremdkörpern (34) in Behältern (18), die mit einer Flüssigkeit (32) gefüllt sind und eine Öffnung (33) sowie einen der Öffnung gegenüber liegenden Boden (26) haben, umfassend:
a) eine Fördereinrichtung (12), die dazu eingerichtet ist, die Behälter (18) entlang einer zumindest im wesentlich horizontal verlaufenden Förderrichtung (20) so zu fördern, dass die Behälter zumindest im wesentlichen aufrecht ausgerichtet sind und deren Böden (26) nach unten weisen,
b) einen optischen Kohärenztomographen (22), der dazu eingerichtet ist, einen Messstrahl (24) zu erzeugen und so von unten auf die vorbeiziehenden Böden (26) der Behälter (18) zu richten, dass der Messstrahl an mehreren Messpunkten (28) ein Tiefenprofil eines jeden Bodens (26) und ggf. darauf abgesetzter Fremdkörper (34) erfasst, und
c) eine Ablenkeinrichtung (23), die dazu eingerichtet ist, während des Schritts b) den Messstrahl (24) entlang einer Scanrichtung (30) zu verlagern, die zumindest zeitweilig zu der Förderrichtung (20) einen Winkel zwischen 45° und 135° einschließt.

4. Vorrichtung nach Anspruch 3, wobei durch den Kohärenztomographen nach dem FD-OCT-Prinzip Interferenzsignale individuell für einzelne spektrale Komponenten des Messstrahls (24) erfassbar sind.

5. Getränkeabfüllanlage mit einer Vorrichtung nach einem der Ansprüche 3 oder 4.
